(19) Europäisches Patentamt
European Patent Office
Office européen des brevets

(11) **EP 4 201 526 A1**

(12) **EUROPEAN PATENT APPLICATION**

(43) Date of publication:
**28.06.2023  Bulletin 2023/26**

(21) Application number: **22213904.0**

(22) Date of filing: **15.12.2022**

(51) International Patent Classification (IPC):
**B01L 3/00** *(2006.01)*       **G01N 27/447** *(2006.01)*
**G01N 1/40** *(2006.01)*       **B03C 5/00** *(2006.01)*
**B03C 5/02** *(2006.01)*       **G01N 15/00** *(2006.01)*

(52) Cooperative Patent Classification (CPC):
**B01L 3/502761; B01L 3/502746; G01N 27/44743;
G01N 27/44773; G01N 27/44795;** B01L 2200/0652;
B01L 2300/0645; B01L 2300/0663;
B01L 2300/0816; B01L 2300/0858;
B01L 2300/0864; B01L 2400/0424; B03C 5/005;
B03C 5/026; B03C 2201/26;                (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **22.12.2021  EP 21216901**

(71) Applicants:
• **Imec VZW
3001 Leuven (BE)**
• **Katholieke Universiteit Leuven
KU Leuven Research & Development
3000 Leuven (BE)**

(72) Inventors:
• **Liu, Chengxun
3001 Leuven (BE)**
• **Dalben Madeira Campos, Camila
3001 Heverlee (BE)**
• **Rottenberg, Xavier
3010 Kessel-Lo (BE)**

(74) Representative: **Patent Department IMEC
IMEC vzw
Patent Department
Kapeldreef 75
3001 Leuven (BE)**

(54)   **MICROFLUIDIC DEVICE FOR SORTING PARTICLES**

(57)   Microfluidic device, apparatus, and method for sorting particles. The microfluidic device comprises a microfluidic channel (11) configured for receiving a microfluidic flow (F) comprising a plurality of particles (1 to 3) having different characteristics, the microfluidic channel (11) having a plurality of output flow channels (12, 13, 15), a first detection means (5) configured for detecting the location of the particles (1 to 3), a plurality of actuation elements (a1 to a16) located along the direction of the microfluidic flow (F) and define a sorting electrode arrangement (EA). The microfluidic device further comprises a control means (6). The control means (6) is configured for receiving signals from the first detection means (5), providing force field profiles (GD1, GD2, GD3) for each of the plurality of particles (1 to 3) wherein each force field profile comprises a plurality of deflection force settings along the direction of the microfluidic flow. Based on the provided force field profiles, the control means further individually addresses the plurality of actuation elements (a1 to a16) for generating a plurality of actuation inducing fields (E1, E2, E2', E3) along the direction of the microfluidic flow (F) wherein the actuation inducing fields is configured to generate the deflection force settings in the force field profiles, wherein the plurality of the force field profiles are different for each different particle and are provided to direct each particle in a gradual manner within the sorting electrode arrangement (EA). The control means is therefore configured for gradually directing at least two different particles simultaneously within the sorting electrode arrangement (EA).

Fig. 1b

EP 4 201 526 A1

(52) Cooperative Patent Classification (CPC): (Cont.)
G01N 2015/1081; G01N 2015/149

## Description

Technical field

The present invention is generally related to microfluidic devices and more specifically to a microfluidic devices for particle sorting or separation.

Technical background

A microfluidic device and system for particle sorting or separation is an important assistance in chemical and biological analysis, diagnostics, food processing and environmental assessment.

A known technique for high-throughput particle sorting including multiple electrodes is explained in document "High-throughput multiplexed fluorescence-activated droplet sorting", by Caen et al. Microsystems & Nanoengineering (2018) 4:33

Another known technique for droplet sorting using multiple electrodes and a droplet identifier is explained in US 8,765,455 B2 "Chip-based droplet sorting", by Neil Reginald Beer et al.

Summary of the invention

The invention is set out in the appended set of claims.

According to a first aspect of the present description, there is provided a microfluidic device for sorting particles comprising a microfluidic channel configured for receiving a microfluidic flow comprising a plurality of particles having different characteristics, the microfluidic channel having a plurality of output flow channels, a first detection means configured for detecting the location of the particles, a plurality of actuation elements located along the direction of the microfluidic flow and define a sorting electrode arrangement.

The microfluidic device further comprises a control means. The control means is configured for receiving signals from the first detection means, providing force field profiles for each of the plurality of particles wherein each force field profile comprises a plurality of deflection force settings along the direction of the microfluidic flow. Based on the provided force field profiles, the control means further individually addresses the plurality of actuation elements for generating a plurality of actuation inducing fields along the direction of the microfluidic flow wherein the actuation inducing fields is configured to generate the deflection force settings in the force field profiles, wherein the plurality of the force field profiles are different for each different particle and are provided to direct each particle in a gradual manner within the sorting electrode arrangement. The control means is therefore configured for gradually directing at least two different particles simultaneously within the sorting electrode arrangement. The actuation inducing fields are advantageously arranged in tandem. The microfluidic device advantageously allows pipelining sorting for at least two different types of particles at the same time within the sorting electrode arrangement so that the particle sorting is multiplexed and time efficient.

According to an embodiment, the first force field profile gradually sorts the first particle to a first output flow channel and the second force field profile gradually sorts the second particle to a second output flow channel.

According to an embodiment, the deflection directions of all the deflection force settings in the same force field profile have the same polarity. The microfluidic device advantageously sorts the particles gradually and gently when the particles are sorted in the sorting electrode arrangement.

According to an embodiment, the control means comprises a second detection means configured for determining the force field profiles for each of the plurality of particles. The second detection means can be configured for classifying of the plurality of particles.

According to an embodiment, the actuation inducing fields are electric fields. The force field profiles are electric field gradient profiles.

According to an embodiment, the control means is configured for directing at least a first particle according to a first force field profile and for directing a second particle according to a second force field profile. Each force field profile comprises a first and a second deflection force settings. The control means simultaneously generates the first deflection force setting by the first actuation inducing field according to the second force field profile for the second particle and the second deflection force setting by the second actuation inducing field according to the first force field profile for the first particle. The control means is configured for individually and dynamically configuring the plurality of actuation inducing fields based on the location of the first and second particle. The microfluidic device advantageously sorts the particle accurately by adjusting the duration of each actuation inducing fields in a force field profile.

According to an embodiment, the plurality of actuation elements comprise a first conductive pillar array inside the microfluidic channel wherein the first conductive pillar array is adjacent to a first wall.

According to an embodiment, the plurality of actuation elements comprises a second conductive pillar array inside the microfluidic channel wherein the second conductive pillar array is adjacent to a second wall opposed to the first wall.

According to an embodiment, the height of conductive pillars of the first and second conductive pillar arrays is at least 80% of the height of the wall. According to an embodiment, the height of conductive pillars of the first and second conductive pillar arrays is equal to the height of the wall.

According to an embodiment, the plurality of actuation elements comprise a first actuation element array located on a first side of a wall and a second actuation element array located on a second side of the same wall, wherein the length of each actuation element of the first actuation element array is shorter than half of the width of the wall.

According to an embodiment, the width of the actuation elements used for generating the subsequent actuation inducing field is equal to or shorter than the width of the actuation elements used for generating the first actuation inducing field.

According to an embodiment, the microfluidic device further comprises a pair of centralizing electrodes configured to preset the entry point of the particles before the particles arrive at the sorting electrode arrangement.

According to an embodiment, the actuation elements are connected to a DC and/or AC voltage source.

According to an example embodiment, at least one deflection force settings are different in the force field profile GD1 and GD2.

According to a second aspect of the present description, there is provided a particle processing device comprises the microfluidic device for sorting particles.

According to a third aspect, there is provided a method for particle sorting in the microfluidic device comprising steps of:

   a. providing a microfluidic flow comprising a plurality of particles comprising at least a first particle and a second particle which has at least one different property from the first particle in the microfluidic channel;
   b. providing a first force field profile configured for the first particle and a second force field profile configured for the second particle; wherein when the first particle arrives at a predetermined first location before the first actuation inducing field, the first actuation inducing field is configured according to a first force field profile;
   c. providing a subsequent actuation inducing field configured according to the first force field profile, after the first particle arrives at a predetermined second location between the first and subsequent actuation inducing field;
   d. providing the first actuation inducing electric field configured according to a second force field profile, after the directly subsequent second particle arrives at the first predetermined location before the first actuation inducing field;

wherein the step c and d have a time overlap and wherein the first force field profile sorts the first particle to a first output flow channel and the second force field profile sorts the second particle to a second output flow channel.

According to an embodiment, the force field profiles are determined based on the different chemical and/or physical and/or biological properties of the particles.

These as well other aspects, advantages, and alternatives will become apparent to those of ordinary skill in the art by reading the following detailed description, with reference where appropriate to the accompanying drawings.

Brief description of the drawings

The disclosure will be further elucidated by means of the following description and the appended figures. Various exemplary embodiments are described herein with reference to the following figures, wherein like numeral denotes like entities. The figures described are schematic and are non-limiting. Further, any reference signs in the claims shall not be construed as limiting the scope of the present disclosure. Still further, in the different figures, the same reference signs refer to the same or analogous elements.

   Figure 1a, 1b show top views of an example microfluidic device for particle sorting.

   Figure 2 shows a 3-dimentional view of the example microfluidic device in figure 1a, 1b for particle sorting.

   Figure 3 shows a top view of a second example microfluidic device for particle sorting.

   Figure 4a to 4d show top views of a third example microfluidic device for particle sorting.

   Figures 5a to 5e show top views of a fourth example microfluidic device for particle sorting.

   Figure 6 shows a top view of a fifth example microfluidic device for particle sorting.

   Figure 7a to 7d shows 3-dimentional views of examples of different arrangement of the actuation elements located on the walls of the microfluidic device.

Detailed description

The following terms are provided solely to aid in the understanding of the present description.

As used herein, a microfluidic channel is a channel for carrying a fluid. Such fluid can be a plain media such as Phosphate-buffered saline, water, or oil. Or it could be a liquid specimen such as blood, sweat, saliva, urine, semen, or sewage water. The fluid may carry particles such as cells. The particles can be cells, bacterium, virus, extracellular vesicles, nucleic acids, proteins, organoids, hydrogel beads, or magnetic beads etc. The particles can also be artificial encapsulates such as aqueous droplets in oil. In some embodiments, the artificial encapsulates, e.g., droplets, comprise one or more particles. The microfluidic channel comprises a wall having a width from 1 $\mu$m to 1 mm. In some embodiments, microfluidic flow refers to a fluid volume between nanoliter to milliliter. According to an example embodiment, the cross-section of the microfluidic channel is rectangular in shape.

As used herein, the output flow channel refers to the microfluidic channels which receive the down steam of the fluid after a sorting event. A sorting event refers to a process through which a particular particle type is deflected in a fluid sample on the basis of its chemical and/or physical and/or biological properties. Such properties can be but not limited to size, morphological parameters, viability and both extracellular and intracellular protein expression, where they are applicable.

As used herein, a detection means can be but not limited to an optical detection means. In some embodiments, the detection means is an imaging device, such as a camera. In some embodiments, the detection means is configured for fluorescent detection.

As used herein, a sorting electrode arrangement refers to the part of the microfluidic channel where all actuation elements, configured for generating actuation inducing fields for deflecting the particles, are located.

As used herein, A deflection plane crosses the microfluidic channel and a plurality of desired output flow channels. According to example embodiments, the deflection plane is in parallel to a wall of the microfluidic channel. A 3-dimentional coordinate system is used to define the directions in the microfluidic channel. In the figures, for example, the x-axis is the microfluidic flow direction, the z-axis is perpendicular to the deflection plane, and the y-axis is perpendicular to the z-axis and the x-axis. A deflection direction is the direction of the deviation of the particle perpendicular to the direction of the microfluidic flow in the deflection plane. According to example embodiments, the deflection direction is on the y-axis.

As used herein, a wall refers to each of the four structural barriers that form the microfluidic channel configured to contain the fluid comprising particles. The wall may also be referred to as a sidewall if the wall is on the xz-plane and the wall may also be referred to as a top or bottom wall if the wall is on the xy-plane. In embodiments, top/bottom walls and sidewalls are interchangeable.

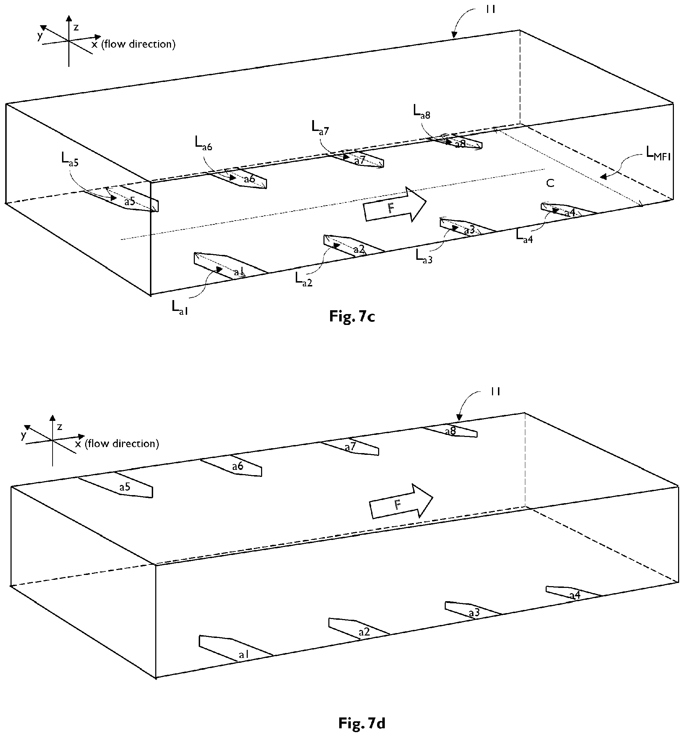

As used herein, a wall has two longitudinal parallel edges in the direction of the fluid flow. The edges are normally the cross section of two walls. A wall central axis, as indicated for example in figure 7c, refers to the center axis of a wall having equal distance to the two edges of the wall. The wall central axis defines therefore two sides of the same wall.

As used herein, the width of the wall, as indicated for example in figure 7c, is the distance between the two edges of a wall in the y-axis.

As used herein, the length, width and height of the actuation elements define the geometry of the actuation elements. When the actuation elements are located on or embedded in the walls, the length of the actuation element is measured between the furthest edge of the actuation element and the wall in the direction perpendicular to the microfluidic flow. The width is the furthest extension of the actuation element in the direction of the fluid flow. When the actuation elements are conductive pillars inside the microfluidic channel, the height of the actuation element is the furthest protrude height from the bottom wall. As used herein, an actuation element refers to an electrode coupled to an electronic circuitry. A plurality of actuation elements are configured for converting electric signal to induce inhomogeneous fields for deflecting particles.

As used herein, an actuation inducing field is a field generated by at least one pair of actuation elements and the field deflects a particle in the microfluidic channel to deviate the particle from the direction of the fluid flow F. The actuation inducing field can be magnetic, acoustic and/or electric field. According to an embodiment, the field is an electric field. The electric field is generated between at least two actuation elements and induce dielectrophoretic (DEP) motion of a polarizable particle. As a result of the DEP motion, the particle is polarized by the electric field. Depending on the dielectric properties of the particle and the medium, the particle motion might be directed in different polarization and in different strength. DEP can be achieved in DC and/or AC electric fields.

As used herein, a deflection force setting is the deflection force applied on the particle in the deflection direction generated by an actuation inducing field between the pair of actuation elements. The deflection force setting comprises field type, field intensity and field polarization. A certain type of field type determines the sensitivity of a particle in such field. A certain field intensity determines the strength of the deflection force and therefore determines a deflection distance during a certain time period in the direction perpendicular to the direction of the fluid flow F. And field polarization determines the deflection polarization of the particle.

As used herein, a force field profile of a particle defines a plurality of the deflection force settings along the direction of the fluid flow.

A first actuation inducing field can be any generated actuation inducing field, a subsequent actuation inducing field is any different actuation inducing field generated after the first actuation inducing field within the sorting electrode arrangement counter to the flow direction F.

According to an example embodiment, the actuation inducing field is an electric field. The force field profiles are electric field gradient profiles. The pulling or pushing force in the deflection force setting applied by an electric field can be defined by the amplitude and polarity thereof.

The particles can be cells, bacterium, virus, extracellular vesicles, nucleic acids, proteins etc. The particles can also be artificial encapsulates such as aqueous droplets in oil. The particle type may be determined by its chemical and/or physical and/or biological properties.

Although some embodiments may have been described with a limited number of actuation elements, it has to be understood that in some embodiments, even more actuation elements, for example more than 20, may be used to direct the particles in a gradual manner within the sorting electrode arrangement. According to some embodiments, more than 50 electrodes may be used to sort the particles.

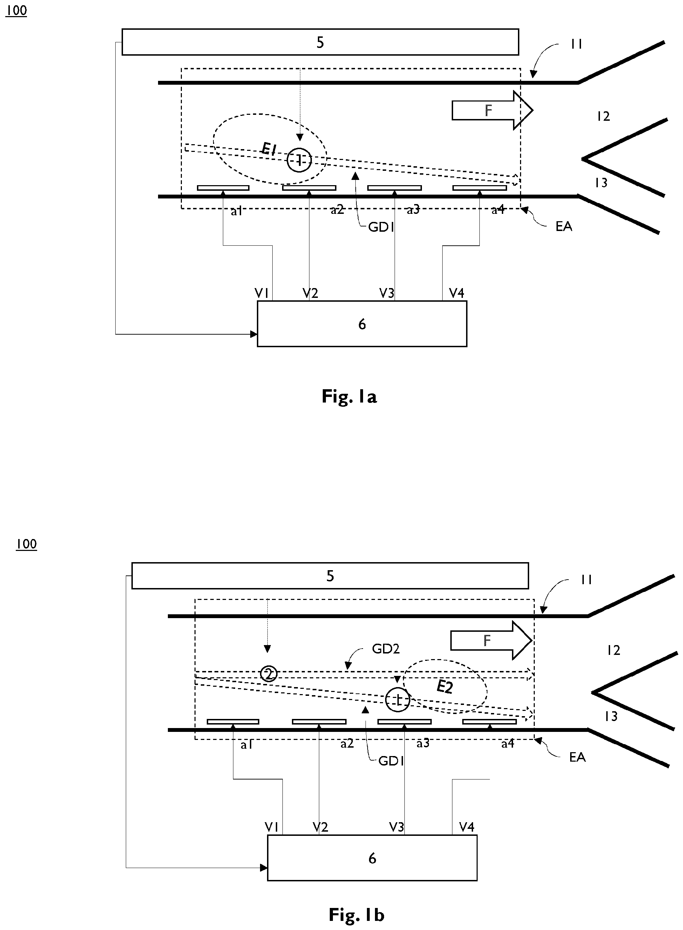

**Figures 1a, 1b** show an example of a microfluidic device 100 comprising a microfluidic channel 11, a plurality of output flow channels 12, 13 axial extending the microfluidic channel 11 in the direction of the microfluidic flow F, a first detection means 5, a plurality of actuation elements a1 to a4 configured along the axial direction of the microfluidic channel 1 in the direction of the microfluidic flow F wherein actuation elements a1 to a4 are conductive pillars in and adjacent to the microfluidic channel 11. At least a first and second actuation inducing fields E1, E2 can be generated by the actuation elements a1 to a4 along the axial direction of the microfluidic channel 11 in the direction of the microfluidic flow F in a sorting electrode arrangement EA, a control means 6 receiving signals from the first detection means 5 and controls the plurality of actuation elements a1 to a4 to sort particles 1, 2.

According to an example embodiment, the conductive pillars a1 to a4 are adjacent to the microfluidic channel 11 such that the distance between the conductive pillar and the adjacent microfluidic channel wall is smaller than the diameter of the smallest particle to be sorted. The particle will not be stuck between the conductive pillars and the adjacent microfluidic channel wall.

According to an example embodiment, the control means 6 detects the particle 1 and provides a first force field profile GD1. The first force field profile GD1 comprises a plurality of deflection force settings along the direction of the microfluidic flow. A first deflection force setting can be configured by a first actuation inducing field between the conductive pillar a1, a2. A second deflection force setting can be configured by a second actuation inducing field between the conductive pillar a3, a4. The first and second actuation inducing fields sort particle 1 gradually over time to the output flow channel 13 by continuously pulling the particle 1.

When a subsequent particle 2, which is physically/chemically/biologically different compared to particle 1, is detected by the first detection means 5, the control means 6 provides a second force field profile GD2 to sort particle 2 gradually over time to the output flow channel 12. The second force field profile GD2 comprises a plurality of deflection force settings along the direction of the microfluidic flow. According to an example embodiment, the deflection force on particle 2 is zero in all deflection force settings in the second force field profile GD2. According to the second force field profile GD2, the first actuation inducing field between the conductive pillars a1, a2 and the second actuation inducing fields between the conductive pillars a3, a4 are zero. Without applying pulling force from the first and second actuation inducing fields, the particle 2 will follow the flow F and being sorted to the output flow channel 12 over time.

According to an example embodiment, the detection means 5 may detect the location of the particles and may be able to detect differences between particles.

According to an example embodiment, deflection directions of all the deflection force settings in the same force field profile have the same polarity.

According to an example embodiment, the actuation inducing fields E1, E2 are electric fields, and the force field profiles are electric field gradient profiles.

According to an example embodiment, the force field profiles GD1, GD2 can be stored in a lookup table.

According to an example embodiment, the distance between the adjacent conductive pillars D1 can be bigger than the diameter of the particles being sorted to output flow channel 13 so that the particles can pass between the pillars.

According to an example embodiment, in operation, when particle 1 has passed a predetermined location before the actuation elements of the first actuation inducing field, the first actuation inducing field can be configured according to the first force field profile GD1 by configuring actuation elements a1, a2.

When particle 1 has passed a predetermined location between the actuation elements of the first actuation inducing field and the second actuation inducing field, the second actuation inducing field can be configured according to the first force field profile GD1 by configuring actuation elements a3, a4. When particle 2 has passed the predetermined location before the actuation elements of the first actuation inducing field, the actuation elements a1, a2 can be reconfigured to generate the first actuation inducing field according to the second force field profile GD2. In this example embodiment, the first actuation inducing field configured by actuation elements a1, a2 is zero. There is a period of time that both particles 1 and 2 are sorted according to different force field profile GD1 and GD2 in the sorting electrode arrangement EA.

When particle 2 has passed the predetermined location between the actuation elements of the first actuation inducing field and the second actuation inducing field, the actuation elements a3, a4 can be reconfigured to generate the second actuation inducing field according to the second force field profile GD2. In this example embodiment, the second actuation inducing field configured by actuation elements a3, a4 is zero.

According to an embodiment, each different force field profile is designed to sort at least one type of particle to a corresponding different output flow channel.

According to an embodiment, the plurality of actuation elements comprise a first conductive pillar array inside the microfluidic channel wherein the first conductive pillar array is adjacent to a first wall.

According to an embodiment, the height of conductive pillars of the conductive pillar array is at least 80% of the height of the wall. According to an embodiment, the height of conductive pillars of the first and second conductive pillar arrays is equal to the height of the wall.

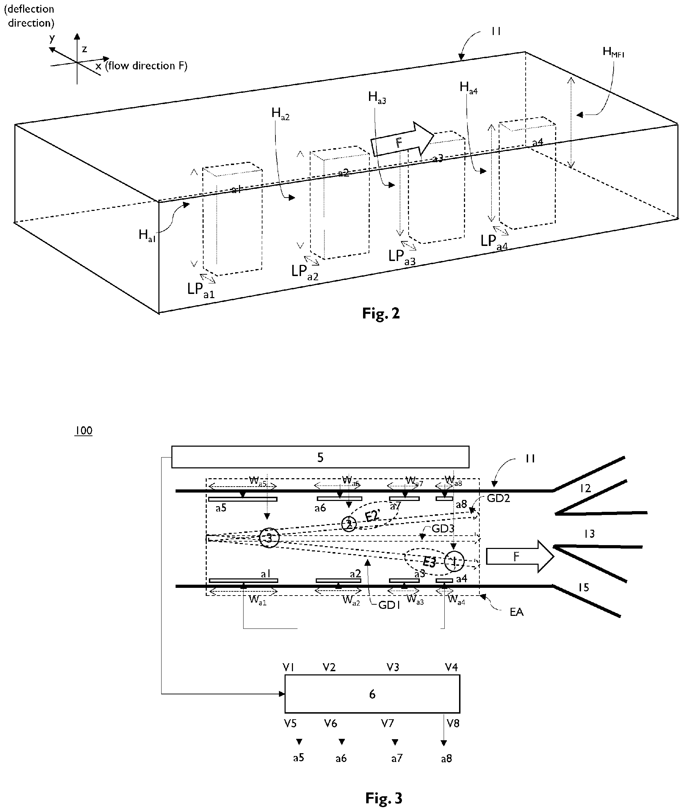

According to an embodiment, the control means can be a general computer or FPGA chip. **Figure 2** shows a 3-dimentional view of the example microfluidic device in figure 1a and 1b. The conductive pillars protrude from the bottom wall of the microfluidic channel 11. According to an example embodiment, the height of the conductive pillars $H_{a1}$ to $H_{a4}$ is equal to the height of the channel $H_{MF1}$. According to another example embodiment, the height of the conductive pillars $H_{a1}$ to $H_{a4}$ in the microfluidic channel 11 is shorter than the height of the channel $H_{MF1}$ wherein the particles can pass between the top of the conductive pillars and the top wall.

According to another example embodiment, the conductive pillar array a1 to a4 is adjacent to a wall wherein the distance D between each conductive pillar and the adjacent wall is:

$$D < 0.5 * L_{MF} - LP_{aX,}$$

where aX represents the corresponding conductive pillar a1 to a4, $LP_{aX}$ represents the thickness of the conductive pillar in the axis-y.

**Figure** 3 shows an example of a microfluidic device 100 comprises a microfluidic channel 11, a plurality of output flow channels 12, 13 and 15 extending the microfluidic channel 11 in the direction of the microfluidic flow F, a first detection means 5, a plurality of actuation elements a1 to a8 are configured along the axial direction of the microfluidic channel 1 in the direction of the microfluidic flow F wherein the actuation elements a1 to a8 can generate actuation inducing fields along the axial direction of the microfluidic channel 11 in the direction of the microfluidic flow F in a sorting electrode arrangement EA, a control means 6 receiving signals from the first detection means 5 and controls the plurality of actuation elements a1-a8 for sorting particles 1, 2 and 3.

*Example scenario 1*

According to an example embodiment, the control means 6 detects the particle 1 and provides a first force field profile GD1. The first force field profile GD1 comprises a plurality of deflection force settings along the direction of the microfluidic flow. A first deflection force setting can be configured by a first actuation inducing field. The first actuation inducing field can be configured by an actuation inducing field between the conductive pillar a1, a2 and/or an actuation inducing field between the conductive pillar a5, a6. A second deflection force setting can be configured by a second actuation inducing field. The second actuation inducing field can be configured by an actuation inducing field between the conductive pillar a2, a3 and/or an actuation inducing field between the conductive pillar a6, a7 is A third deflection force setting can be configured by a third actuation inducing field. The third actuation inducing field can be configured by an actuation inducing field between the conductive pillar a3, a4 and/or an actuation inducing field between the conductive pillar a7, a8. The actuation inducing fields between the conductive pillar a1, a2 and/or a2, a3 and/or a3, a4 pulls the particle 1. According to an example embodiment, the actuation inducing fields between the conductive pillar a5, a6 and/or a6, a7 and/or a7, a8 are zero. According to another example embodiment, the actuation inducing fields between the conductive pillar a5, a6 and/or a6, a7 and/or a7, a8 pushes the particle 1. The first, second and third actuation inducing fields are configured to sort particle 1 gradually over time to the output flow channel 15 by continuously pulling the particle 1 wherein the deflection directions of deflection force applied to the first particle 1 by the first, second and third actuation inducing fields have the same polarity.

When a subsequent particle 2, which is physically/chemically different compared to particle 1, is detected by the first detection means 5, the control means 6 provides a second force field profile GD2. The first force field profile GD1 comprises a plurality of deflection force settings along the direction of the microfluidic flow F. A first deflection force setting can be configured by a first actuation inducing field. The first actuation inducing field can be configured by an actuation inducing field between the conductive pillar a5, a6 and/or an actuation inducing field between the conductive pillar a1, a2. A second deflection force setting can be configured by a second actuation inducing field. The second actuation inducing field can be configured by an actuation inducing field between the conductive pillar a6, a7 and/or an actuation inducing field between the conductive pillar a2, a3. A third deflection force setting can be configured by a third actuation inducing field. The third actuation inducing field can be configured by an actuation inducing field between the conductive pillar a7, a8 and/or an actuation inducing field between the conductive pillar a3, a4. The actuation inducing fields between the conductive pillar a5, a6 and/or a6, a7 and/or a7, a8 pulls the particle 2. According to an example embodiment, the actuation inducing fields between the conductive pillar a1, a2 and/or a2, a3 and/or a3, a4 are zero. According to another example embodiment, the actuation inducing fields between the conductive pillar a1, a2 and/or a2, a3 and/or a3, a4 pushes the particle 2. The first, second and third actuation inducing fields sort particle 2 gradually over time to the output flow channel 12 by continuously pulling the particle 2.

When a subsequent particle 3, which is physically/chemically/biologically different compared to particle 1 and 2, is detected by the first detection means 5, the control means 6 provides a third force field profile GD3 to sort particle 3 gradually over time to the output flow channel 13. The third force field profile GD3 comprises a plurality of deflection force settings along the direction of the microfluidic flow. According to an example embodiment, the deflection force on particle 3 is zero in all deflection force settings in the third force field profile GD3. According to the third force field profile GD3, the first, second and third actuation inducing fields are zero.

Without applying pulling force from the first and second actuation inducing fields, the particle 3 will follow the flow F and being sorted to the output flow channel 13 over time.

According to an example embodiment, in operation, particle 1 is detected by the first detection means 5 and a signal is coupled to the control means 6. The control means 6 provides the first force field profile GD1. When the location of particle 1 has passed a predetermined location before the actuation elements a1, a2 of the first actuation inducing field, the first actuation inducing field can be configured between actuation elements a1, a2 according to the first force field profile GD1. When particle 1 has passed a predetermined location between the actuation elements of the first and second actuation inducing fields, the second actuation inducing field between the actuation elements a2, a3 can be configured according to the first force field profile GD1. In this example, the predetermined location between the actuation elements of the first and second actuation inducing fields is a xy-plane between actuation elements a2, a6. When particle 2 has passed the predetermined location before the actuation elements of the first actuation inducing field, the first actuation inducing field can be reconfigured by generating an actuation inducing field between actuation elements a5, a6 and reset actuation inducing field between the actuation elements a1, a2 according to the second force field profile GD2. When particle 1 has passed a predetermined location between the actuation elements of the second actuation inducing field and the third actuation inducing field, the third actuation inducing field E3 can be configured according to the first force field profile GD1 by configuring actuation elements a3, a4. In this example, the predetermined location between the actuation elements of the first and second actuation inducing fields is a xy-plane between actuation elements a3, a7. When particle 2 has passed the predetermined location between the actuation elements of the first actuation inducing field and the second actuation inducing field, the second actuation inducing field can be reconfigured by generating an actuation inducing field E2' between actuation elements a6, a7 and reset actuation inducing field between the actuation elements a2, a3 according to the second force field profile GD2. When particle 3 has passed the predetermined location before the actuation elements of the first actuation inducing field, the first actuation inducing field can be reconfigured by resetting the actuation inducing field between actuation elements a5, a6 according to the third force field profile GD3. When particle 2 has passed the predetermined location between the actuation elements of the second actuation inducing field and the third actuation inducing field, the third actuation inducing field can be reconfigured by generating an actuation inducing field between actuation elements a7, a8 and reset the actuation inducing field between the actuation elements a3, a4 according to the second force field profile GD2. When particle 3 has passed the predetermined location between the actuation elements of the first actuation inducing field and the second actuation inducing field, the second actuation inducing field can be reconfigured by resetting the actuation inducing field between the actuation elements a6, a7 according to the third force field profile GD3. When particle 3 has passed the predetermined location between the actuation elements of the second actuation inducing field and the third actuation inducing field, the third actuation inducing field can be reconfigured by resetting the actuation inducing field between the actuation elements a7, a8 according to the third force field profile GD3.

*Example scenario 2*

According to an example embodiment, the control means 6 detects the particle 1 and provides a first force field profile GD1. The first force field profile GD1 comprises a plurality of deflection force settings along the direction of the microfluidic flow. A first deflection force setting can be configured by a first actuation inducing field. The first actuation inducing field can be configured by an actuation inducing field between the conductive pillar a1, a5. A second deflection force setting can be configured by a second actuation inducing field between the conductive pillar a2, a6. A third deflection force setting can be configured by a third actuation inducing field by an actuation inducing field between the conductive pillar a3, a7. A fourth deflection force setting can be configured by a third actuation inducing field by an actuation inducing field between the conductive pillar a4, a8. The first, second, third and fourth actuation inducing fields are configured to sort particle 1 gradually over time to the output flow channel 15 by continuously pulling the particle 1 wherein the deflection directions of deflection force applied to the first particle 1 by the first, second, third and fourth actuation inducing fields have the same polarity.

When a subsequent particle 2, which is physically/chemically different compared to particle 1, is detected by the first detection means 5, the control means 6 provides a second force field profile GD2. The first force field profile GD2 comprises a plurality of deflection force settings along the direction of the microfluidic flow. A first deflection force setting can be configured by a first actuation inducing field. The first actuation inducing field can be configured by an actuation inducing field between the conductive pillar a1, a5. A second deflection force setting can be configured by a second actuation inducing field between the conductive pillar a2, a6. A third deflection force setting can be configured by a third actuation inducing field by an actuation inducing field between the conductive pillar a3, a7. A fourth deflection force setting can be configured by a third actuation inducing field by an actuation inducing field between the conductive pillar a4, a8. The first, second, third and fourth actuation inducing fields are configured to sort particle 2 gradually over time to the output flow channel 12 by continuously pulling the particle 2 wherein the deflection directions of deflection force applied to the first particle 2 by the first, second, third and fourth actuation inducing fields have the same polarity.

When a subsequent particle 3, which is physically/chemically/biologically different compared to particle 1 and 2, is detected by the first detection means 5, the control means 6 provides a third force field profile GD3 to sort particle 3 gradually over time to the output flow channel 13. The third force field profile GD3 comprises a plurality of deflection force settings along the direction of the microfluidic flow. According to an example embodiment, the deflection force on particle 3 is zero in all deflection force settings in the third force field profile GD3. According to the third force field profile GD3, the first, second, third and fourth actuation inducing fields are zero. Without applying pulling force from the first and second actuation inducing fields, the particle 3 will follow the flow F and being sorted to the output flow channel 13 over time.

According to an example embodiment, in operation, particle 1 is detected by the first detection means 5 and a signal is coupled to the control means 6. The control means 6 provides the first force field profile GD1. When the location of particle 1 has passed a predetermined location before the actuation elements a1, a5 of the first actuation inducing field, the first actuation inducing field can be configured between actuation elements a1, a5 according to the first force field profile GD1. When particle 1 has passed a predetermined location between the actuation elements of the first and second actuation inducing fields, the second actuation inducing field between the actuation elements a2, a6 can be configured according to the first force field profile GD1. When particle 2 has passed the predetermined location before the actuation elements of the first actuation inducing field, the first actuation inducing field can be reconfigured by generating an actuation inducing field between actuation elements a1, a5 according to the second force field profile GD2. When particle 1 has passed a predetermined location between the actuation elements of the second actuation inducing field and the third actuation inducing field, the third actuation inducing field can be configured according to the first force field profile GD1 by configuring actuation elements a3, a7. When particle 2 has passed the predetermined location between the actuation elements of the first actuation inducing field and the second actuation inducing field, the second actuation inducing field can be reconfigured by generating an actuation inducing field between actuation elements a2, a6 according to the second force field profile GD2. When particle 3 has passed the predetermined location before the actuation elements of the first actuation inducing field, the first actuation inducing field can be reconfigured by resetting the actuation inducing field between actuation elements a1, a5 according to the third force field profile GD3. When particle 1 has passed a predetermined location between the actuation elements of the third actuation inducing field and the fourth actuation inducing field, the fourth actuation inducing field can be configured according to the first force field profile GD1 by configuring actuation elements a4, a8. When particle 2 has passed the predetermined location between the actuation elements of the second actuation inducing field and the third actuation inducing field, the third actuation inducing field can be reconfigured by generating an actuation inducing field between actuation elements a3, a7 according to the second force field profile GD2. When particle 3 has passed the predetermined location between the actuation elements of the first actuation inducing field and the second actuation inducing field, the second actuation inducing field can be reconfigured by resetting the actuation inducing field between the actuation elements a2, a6 according to the third force field profile GD3. When particle 2 has passed a predetermined location between the actuation elements of the third actuation inducing field and the fourth actuation inducing field, the fourth actuation inducing field can be configured according to the first force field profile GD2 by configuring actuation elements a4, a8. When particle 3 has passed the predetermined location between the actuation elements of the second actuation inducing field and the third actuation inducing field, the third actuation inducing field can be reconfigured by resetting the actuation inducing field between the actuation elements a3, a7 according to the third force field profile GD3. When particle 3 has passed a predetermined location between the actuation elements of the third actuation inducing field and the fourth actuation inducing field, the fourth actuation inducing field can be configured according to the first force field profile GD3 by configuring actuation elements a4, a8.

According to an example embodiment, the width of the actuation elements of the subsequent actuation inducing field in the direction of the flow F is equal to or shorter than the actuation elements of the previous actuation inducing field, eg. $W_{a3} < W_{a1}$.

According to an embodiment, the plurality of actuation elements comprises a second conductive pillar array inside the microfluidic channel wherein the second conductive pillar array is adjacent to a second wall opposed to the first wall.

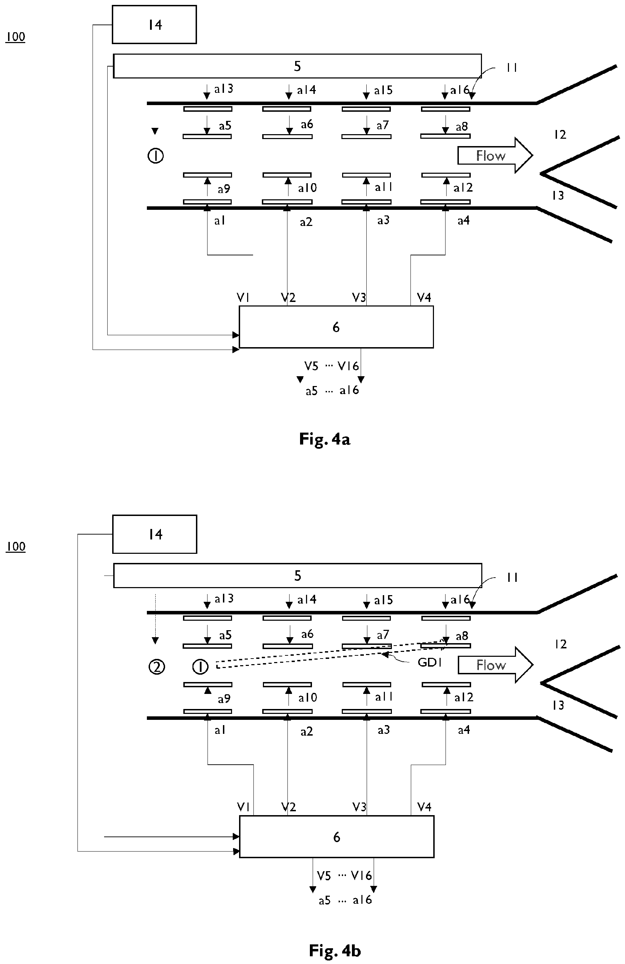

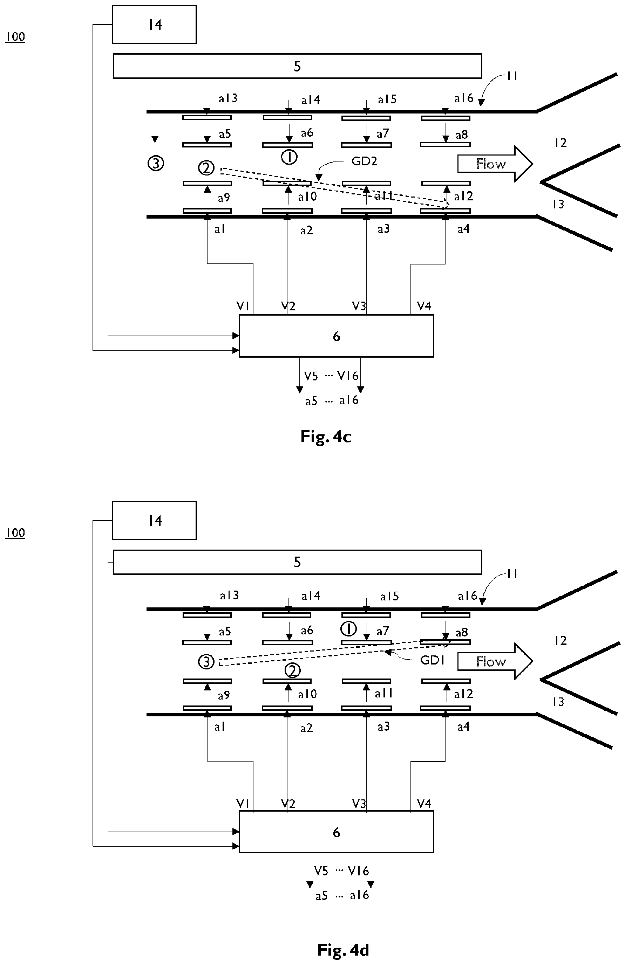

**Figure 4a-4d** shows an example of a microfluidic device 100 comprises a microfluidic channel 11, a plurality of output flow channels 12, 13 axial extending the microfluidic channel 11 in the direction of the microfluidic flow F, a first and second detection means 5, 14, a plurality of actuation elements a1 to a16 are configured along the axial direction of the microfluidic channel 11 in the direction of the microfluidic flow F wherein the actuation elements a1 to a16 are conductive pillars in a sorting electrode arrangement EA in the microfluidic channel 11. The actuation elements a1 to a16 can configure a plurality of actuation inducing fields along the axial direction of the microfluidic channel 11 in the direction of the microfluidic flow F, a control means 6 receiving signals from the first and second detection means 14, 5 and controls

**EP 4 201 526 A1**

the plurality of actuation elements a1-a16 and particles 1 to 3.

According to an example embodiment, the second detection means 14 can detect the difference between the particles and can further classify the particles based on the detected at least one differences between particles.

According to an example embodiment, when particle 1 is detected and classified by the second detection means 14 and a signal is coupled to the control means 6. The control means 6 determines a first force field profile GD1 for particle 1 to sort particle 1 gradually over time to the output flow channel 12.

When a subsequent particle 2, which is physically/chemically/biologically different compared to particle 1, is detected and classified by the first detection means 14, the control means 6 determines a second force field profile GD2 to sort particle 2 gradually over time to the output flow channel 13.

When a subsequent particle 3, which is physically/chemically/biologically different compared to particle 2, is detected and classified by the first detection means 14, the control means 6 determines a second force field profile GD3 to sort particle 3 gradually over time to the output flow channel 12.

According to an example embodiment, the particle 3 can be physically/chemically/biologically identical to particle 1. According to another example embodiment, the particle 3 can be physically/chemically/biologically different to particle 1.

Each of the force field profiles GD1 to GD 3 comprises a first actuation inducing field can be configured by actuation elements a1, a5, a9, a13, a second actuation inducing field can be configured by actuation elements a2, a6, a10, a14, a third actuation inducing field can be configured by actuation elements a3, a7, a11, a15 and a fourth actuation inducing field can be configured by actuation elements a4, a8, a12, a16. The first to fourth actuation inducing fields sort each particle gradually over time to the output flow channel 12 or 13 by continuously pulling the particle wherein the deflection directions of deflection force applied to each particle by the first, second, third and fourth actuation inducing fields have the same polarity.

According to an example embodiment, in operation, particle 1 is detected by the first and second detection means 5, 14 and a signal is coupled to the control means 6. The control means 6 determines the first force field profile GD1. When the location of particle 1 has passed a predetermined location before the actuation elements a1, a5, a9, a13 of the first actuation inducing field, the first actuation inducing field can be configured according to the first force field profile GD1 by configuring actuation elements a5, a9. When particle 1 has passed a predetermined location between the actuation elements of the first actuation inducing field and the second actuation inducing field, the second actuation inducing field can be configured according to the first force field profile GD1 by configuring actuation elements a6, a10. When particle 2 has passed the predetermined location before the actuation elements of the first actuation inducing field, the first actuation inducing field can be reconfigured by generating an actuation inducing field between actuation elements a5, a9 according to the second force field profile GD2. When particle 1 has passed a predetermined location between the actuation elements of the second actuation inducing field and the third actuation inducing field, the third actuation inducing field can be configured according to the first force field profile GD1 by configuring actuation elements a7 and a15. When particle 2 has passed the predetermined location between the actuation elements of the first actuation inducing field and the second actuation inducing field, the second actuation inducing field can be reconfigured by generating an actuation inducing field between actuation elements a6, a10 according to the second force field profile GD2. When particle 3 has passed the predetermined location before the actuation elements of the first actuation inducing field, the first actuation inducing field can be reconfigured by resetting the actuation inducing field between actuation elements a5, a9 to zero according to the third force field profile GD3. When particle 1 has passed a predetermined location between the actuation elements of the third actuation inducing field and the fourth actuation inducing field, the fourth actuation inducing field can be configured according to the first force field profile GD1 by configuring an actuation inducing field between actuation elements a8, a16. When particle 2 has passed the predetermined location between the actuation elements of the second actuation inducing field and the third actuation inducing field, the third actuation inducing field can be reconfigured by generating an actuation inducing field between actuation elements a3, a11 according to the second force field profile GD2. When particle 3 has passed the predetermined location between the actuation elements of the first actuation inducing field and the second actuation inducing field, the second actuation inducing field can be reconfigured by resetting the actuation inducing field between the actuation elements a6, a10 to zero according to the third force field profile GD3. When particle 2 has passed the predetermined location between the actuation elements of the third actuation inducing field and the fourth actuation inducing field, the fourth actuation inducing field can be reconfigured by generating an actuation inducing field between actuation elements a4, a12 according to the second force field profile GD2. When particle 3 has passed the predetermined location between the actuation elements of the second actuation inducing field and the third actuation inducing field, the third actuation inducing field can be reconfigured by resetting the actuation inducing field between the actuation elements a7, a15 and a3, a11 to zero according to the third force field profile GD3. When particle 3 has passed the predetermined location between the actuation elements of the third actuation inducing field and the fourth actuation inducing field, the fourth actuation inducing field can be reconfigured by resetting the actuation inducing field between the actuation elements a8, a16 and a4, a12 to zero according to the third force field profile GD3.

According to an example embodiment, the microfluidic device 100 comprises more than 16 actuation elements. According to an example embodiment, the actuation elements in the microfluidic device 100 are all conductive pillars in the microfluidic channel 11. According to an example embodiment, the conductive pillars are electrode protrusions whereas the particles can pass over the electrode protrusions.

According to another example embodiment, the distance between each conductive pillar and the adjacent wall is larger than the diameter of at least one type of the particle so that the particle can flow between the conductive pillar and the adjacent wall.

According to an embodiment, the height of conductive pillars of the conductive pillar array is at least 80% of the height of the wall. According to an embodiment, the height of conductive pillars of the first and second conductive pillar arrays is equal to the height of the wall.

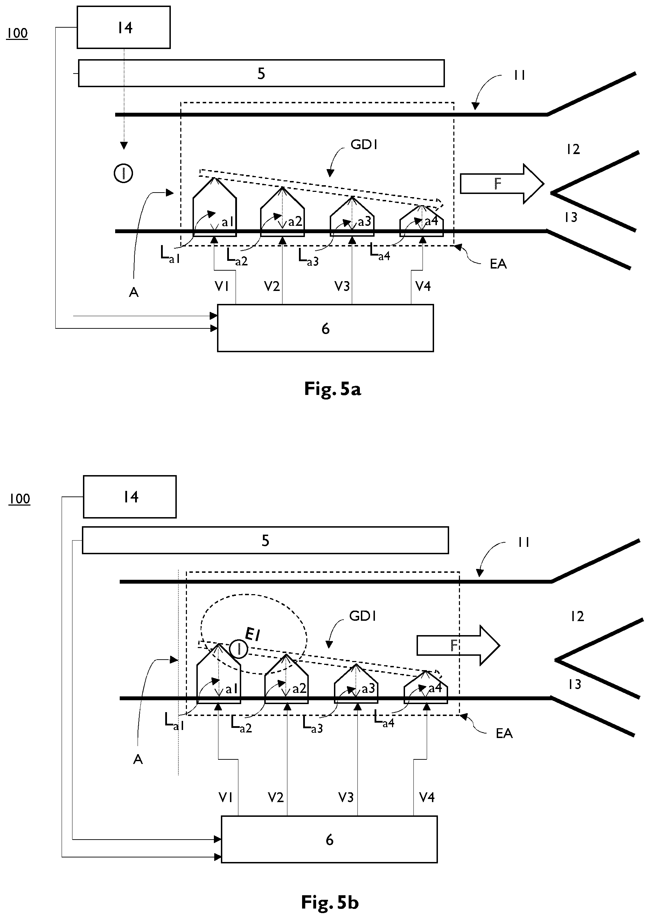

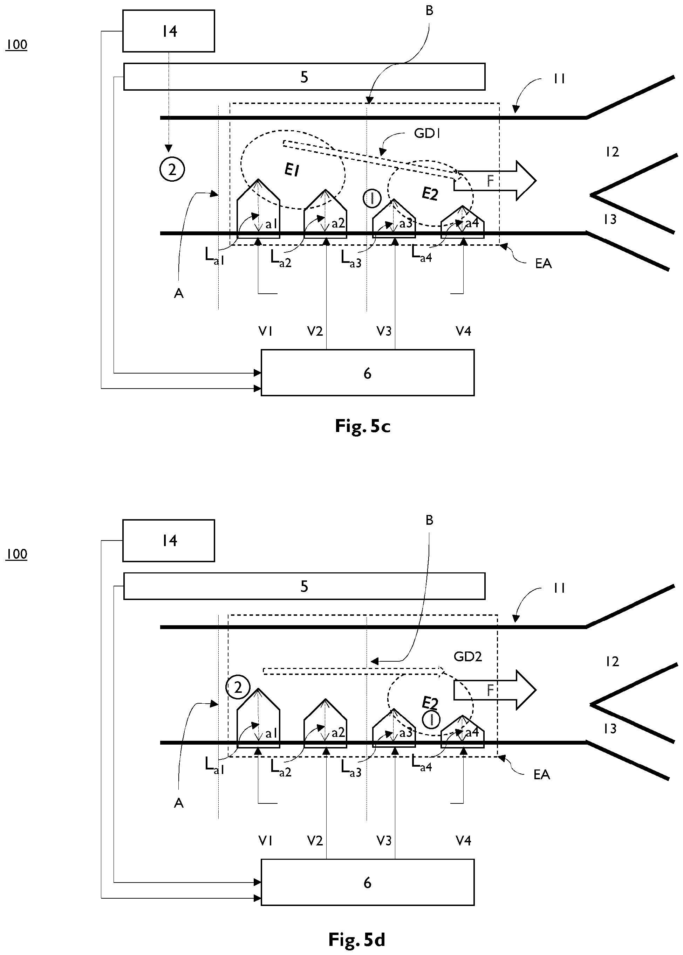

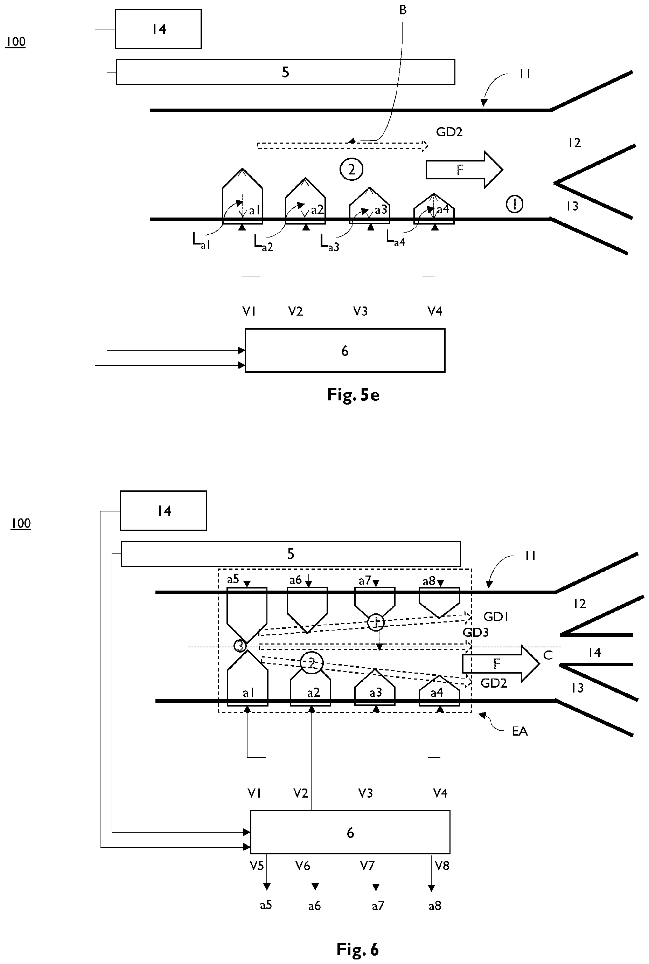

**Figure 5a to 5e** shows an example of a microfluidic device 100 comprises a microfluidic channel 11, a plurality of output flow channels 12, 13 axial extending the microfluidic channel 11 in the direction of the microfluidic flow F, a first and second detection means 5, 14, a plurality of actuation elements a1 to a4 are configured along the axial direction of the microfluidic channel 11 in the direction of the microfluidic flow F wherein at least a first and second actuation inducing fields E1, E2 can be generated by the actuation elements along the axial direction of the microfluidic channel 11 in the direction of the microfluidic flow F in a sorting electrode arrangement EA, a control means 6 receiving signals from the first and second detection means 14, 5 and controls the plurality of actuation elements a1 to a4. A plurality of particles 1 and 2 are sorted according to a first and second force field profiles GD1, GD2. A predetermined first location A is defined prior to the sorting electrode arrangement EA. A predetermined second location B is defined between the first actuation inducing field E1 and the second actuation inducing field E2.

According to an example embodiment, in operation, the particle 1, 2 are sorted in a similar manner in the example shown in Figure 1a, 1b.

According to an example embodiment, the length of the actuation elements configuring the subsequent actuation inducing field E2 is shorter than the length of the actuation elements configuring the first actuation inducing field E1 along the counter direction of the flow direction F, e.g., in figure 1a to 1e, $L_{a1}>L_{a3}$, $L_{a1}>L_{a4}$, $L_{a2}>L_{a3}$, $L_{a2}>L_{a4}$. According to an example embodiment, the length of the actuation elements is the same in the same actuation inducing field, e.g., $L_{a1}=L_{a2}$ and/or $L_{a3}=L_{a4}$. According to another example embodiment, the length of the subsequent actuation element is shorter than the previous actuation elements of the same actuation inducing field along the counter direction of the flow direction F, meaning $L_{a1}>L_{a2}$ and/or $L_{a3}>L_{a4}$.

According to an example embodiment, each of the deflection force settings of the force field profile is the same wherein the gradual change of the length of the actuation elements in the direction of the flow F leads to the gradual pulling of the particle 1 towards output flow channel 13.

According to another example embodiment, the maximum force of the deflection force settings of the force field profile gradually decrease along the direction of the flow F. The gentle pulling force applied on, for example particle 1, prevents damage of particle 1.

According to an embodiment, the plurality of actuation elements comprise a first actuation element array located on a first side of a wall and a second actuation element array located on a second side of the same wall, wherein the length of each actuation element of the first actuation element array is shorter than half of the width of the wall.

According to an embodiment, the width of the actuation elements used for generating the subsequent actuation inducing field is equal to or shorter than the width of the actuation elements used for generating the first actuation inducing field.

**Figure** 6 shows an example of a microfluidic device 100 comprises a microfluidic channel 11, a plurality of output flow channels 12, 13 and 15 axial extending the microfluidic channel 11 in the direction of the microfluidic flow F, a first and second detection means 5, 14, a plurality of actuation elements a1 to a8 are configured along the axial direction of the microfluidic channel 1 in the direction of the microfluidic flow F wherein the actuation elements can create at least a first and second actuation inducing fields along the axial direction of the microfluidic channel 11 in the direction of the microfluidic flow F in a sorting electrode arrangement EA, a control means 6 receiving signals from the first and second detection means 5, 14 and controls the plurality of actuation elements a1 to a8 and plurality of particles 1, 2 and 3 accordingly with force field profiles GD1, GD2 and GD3.

According to an example embodiment, in operation, the particles 1, 2 and 3 are sorted in a similar manner in Figure 3.

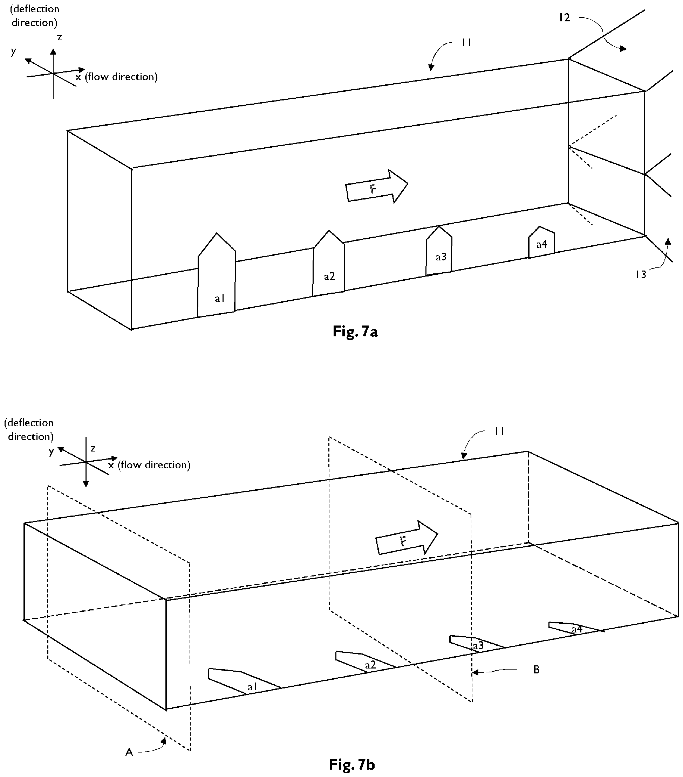

**Figure 7a to 7d** shows 3-dimentional views of examples of different arrangement of the actuation elements located on the walls of the microfluidic device.

According to an example embodiment, as shown in **figure 7a,** the deflection direction can be on the axis-z.

The predetermined locations, such as the predetermined first and second locations as shown in **figure 7b,** are a location on the plane A or B in the yz-plane.

A wall central axis C can be the Median line of a wall where the actuation elements a1 to a8 locate in view of the width of the wall $L_{MF1}$ as shown in **figure 7c.**

According to an example embodiment, as shown in figure 7c, the actuation elements a1 to a8 are in an electrode layer at bottom wall of the microfluidic channel 11. The length $L_{a1}$-$L_{a8}$ of the actuation elements a1 to a8 are shorter than half of the bottom wall width $L_{MF1}$.

According to an example embodiment, as shown in **figure 7d,** the actuation elements a1-a8 are electrode layer at different walls of the microfluidic channel 11. According to an example embodiment, the actuation elements a1-a4 locate on the bottom wall and the actuation elements a5-a8 locate on the top wall. The length $L_{a1}$-$L_{a8}$ of the actuation elements a1-a8 are shorter than half of the bottom or top wall width $L_{MF1}$.

## Claims

1. A microfluidic device for sorting particles comprising:

   a microfluidic channel (11) configured for receiving a microfluidic flow (F) comprising a plurality of particles (1 to 3) having different characteristics; and the microfluidic channel (11) having a plurality of output flow channels (12, 13, 15);
   a first detection means (5) configured for detecting the location of the particles (1 to 3);
   a plurality of actuation elements (a1 to a16) located along the direction of the microfluidic flow (F) and define a sorting electrode arrangement (EA);
   a control means (6) configured for receiving signals from the first detection means (5), providing force field profiles (GD1, GD2, GD3) for each of the plurality of particles (1 to 3) wherein each force field profile comprises a plurality of deflection force settings along the direction of the microfluidic flow; and based on the provided force field profiles, the control means (6) is further configured for individually addressing the plurality of actuation elements (a1 to a16) for generating a plurality of actuation inducing fields (E1, E2, E2', E3) along the direction of the microfluidic flow (F) wherein the actuation inducing fields are configured to generate the deflection force settings in the force field profiles, wherein the plurality of the force field profiles are different for each different particle and are provided to direct each particle in a gradual manner within the sorting electrode arrangement (EA);
   and wherein the control means is configured for gradually directing at least two different particles simultaneously within the sorting electrode arrangement (EA).

2. A microfluidic device according to claim 1, wherein deflection directions of all the deflection force settings in the same force field profile have the same polarity.

3. A microfluidic device according to any of the preceding claims, wherein the control means (6) comprising a second detection means (14) configured for determining the force field profiles (GD1, GD2, GD3) for each of the plurality of particles (1 to 3).

4. A microfluidic device according to any of the preceding claims, wherein the actuation inducing fields (E1, E2, E2') are dielectrophoretic electric fields, and wherein the force field profiles are electric field gradient profiles.

5. A microfluidic device according to claims 3 or 4, wherein the control means (6) is configured for directing at least a first particle (1) according to a first force field profile (GD1) and for directing a second particle (2) according to a second force field profile (GD2) and each force field profile comprises a first and a second deflection force settings; wherein the control means simultaneously generates the first deflection force setting by the first actuation inducing field according to the second force field profile for the second particle (2) and the second deflection force setting by the second actuation inducing field according to the first force field profile for the first particle (1);
   and the control means (6) is configured for individually and dynamically configuring the plurality of actuation inducing fields based on the location of the first and second particle.

6. A microfluidic device according to any of the preceding claims, wherein the plurality of actuation elements (a1 to a16) comprises a first conductive pillar array inside the microfluidic channel (11); and wherein the first conductive pillar array is adjacent to a first wall.

7. A microfluidic device according to claim 6, wherein the plurality of actuation elements (a1 to a16) comprises a second conductive pillar array inside the microfluidic channel (11); and wherein the second conductive pillar array is adjacent to a second wall opposed to the first wall.

8. A microfluidic device according to claim 6 or 7, wherein the height of the conductive pillars ($H_{a1}$ to $H_{a4}$) of the first and second conductive pillar arrays is at least 80% of the height of the wall ($H_{MF1}$).

9. A microfluidic device according to any of claims 1 to 5, wherein the plurality of actuation elements (La1 to La8) comprises a first actuation element array located on a first side of a wall and a second actuation element array located on a second side of the same wall, wherein the length ($L_{a1}$ to $L_{a8}$) of each actuation element (La1 to La8) of the first actuation element array is shorter than half of the width of the wall

($L_{MF1}$).

10. A microfluidic device according to any of the preceding claims, wherein the width ($W_{a1}$ to $W_{a8}$) of the actuation elements used for generating the subsequent actuation inducing field (E2) is equal to or shorter than the width of the actuation elements used for generating the first actuation inducing field (E1).

11. A microfluidic device according to any of the preceding claims further comprising a pair of centralizing electrodes configured to preset the entry point of the particles before the particles arrive at the sorting electrode arrangement (EA).

12. A microfluidic device according to any of the preceding claims, wherein the actuation elements (a1 to a16) are connected to a DC and/or AC voltage source.

13. An apparatus for processing particles comprising a microfluidic device according to any of the preceding claims.

14. A method for particle sorting in a microfluidic device (100) according claim 1, comprising the steps of:

a. providing a microfluidic flow comprising a plurality of particles comprising at least a first particle (1) and a second particle (2) which has at least one different property from the first particle (1) in the microfluidic channel (11);
b. providing a first force field profile configured for the first particle (1) and a second force field profile configured for the second particle (2); wherein when the first particle (1) arrives at a predetermined first location (A) before the first actuation inducing field (E1), the first actuation inducing field (E1) is configured according to a first force field profile;
c. providing a subsequent actuation inducing field (E2) configured according to the first force field profile, after the first particle (1) arrives at a predetermined second location (B) between the first and subsequent actuation inducing field;
d. providing the first actuation inducing electric field (E1) configured according to a second force field profile, after the directly subsequent second particle (2) arrives at the first predetermined location (A) before the first actuation inducing field;

and wherein the step c and step d have a time overlap and wherein the first force field profile sorts the first particle (1) to a first output flow channel (13) and the second force field profile sorts the second particle (2) to a second output flow channel (12).

15. A method according to claim 14, wherein the force field profiles are determined based on the different chemical and/or physical and/or biological properties of the particles.

100

**Fig. 1a**

100

**Fig. 1b**

(deflection
direction)

y

z

x (flow direction F)

$H_{a1}$

$H_{a2}$

$H_{a3}$

$H_{a4}$

$H_{MFI}$

II

F

a1

a2

a3

a4

$LP_{a1}$

$LP_{a2}$

$LP_{a3}$

$LP_{a4}$

**Fig. 2**

100

5

II

$W_{a5}$   $W_{a6}$   $W_{a7}$   $W_{a8}$

a5   a6   a7   a8

GD2

12

E2'

GD3

13

E3

F

15

a1   a2   a3   a4

$W_{a1}$   $W_{a2}$   GD1   $W_{a3}$   $W_{a4}$

EA

V1   V2   V3   V4

6

V5   V6   V7   V8

a5   a6   a7   a8

**Fig. 3**

**Fig. 4a**

**Fig. 4b**

100

**Fig. 4c**

100

**Fig. 4d**

**Fig. 5a**

**Fig. 5b**

Fig. 5c

Fig. 5d

Fig. 5e

Fig. 6

(deflection direction)

z

y

x (flow direction)

I1

I2

F

a1

a2

a3

a4

I3

**Fig. 7a**

(deflection direction)

z

y

x (flow direction)

I1

F

a1

a2

a3

a4

B

A

**Fig. 7b**

**Fig. 7c**

**Fig. 7d**

**EP 4 201 526 A1**

Europäisches
Patentamt

European
Patent Office

Office européen
des brevets

# EUROPEAN SEARCH REPORT

Application Number

**EP 22 21 3904**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/084011 A1 (IMAI KAITA [JP] ET AL) 21 March 2019 (2019-03-21) | 1-5, 12-15 | INV. B01L3/00 |
| Y | * paragraphs [0022] - [0038]; figures 1-9 * | 6-10 | G01N27/447 G01N1/40 |
| | ----- | | B03C5/00 |
| X | US 2013/256197 A1 (KATSUMOTO YOICHI [JP]) 3 October 2013 (2013-10-03) | 1-5, 12-15 | B03C5/02 G01N15/00 |
| Y | * paragraphs [0002], [0012], [0074] - [0087], [0121], [0122]; figures 1-7 * | 6-10 | |
| | ----- | | |
| Y | US 2007/152206 A1 (CHO YOON-KYOUNG [KR] ET AL) 5 July 2007 (2007-07-05) | 6-10 | |
| A | * paragraphs [0052], [0053], [0075]; figures 1-11 * | 1-5, 11-15 | |
| | ----- | | |
| Y | CN 110 628 568 A (UNIV BEIJING CHEM TECH) 31 December 2019 (2019-12-31) | 6-10 | |
| A | * claims 1-10; figures 1-8 * | 1-5, 11-15 | |
| | ----- | | |
| A | EP 3 410 107 A1 (AFI CORP [JP]; UNIV KYOTO [JP]) 5 December 2018 (2018-12-05) * paragraphs [0035] - [0039]; figure 2 * | 1-15 | TECHNICAL FIELDS SEARCHED (IPC) B01L G01N |
| | ----- | | B03C |
| A | EP 3 418 373 A1 (AFI CORP [JP]; UNIV KYOTO [JP]) 26 December 2018 (2018-12-26) * paragraphs [0065] - [0070]; figure 12 * | 1-15 | |
| | ----- | | |

The present search report has been drawn up for all claims

| Place of search | Date of completion of the search | Examiner |
|---|---|---|
| The Hague | 11 April 2023 | Viskanic, Martino |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

23

## ANNEX TO THE EUROPEAN SEARCH REPORT
## ON EUROPEAN PATENT APPLICATION NO.

EP 22 21 3904

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2023

| Patent document cited in search report | | | Publication date | Patent family member(s) | | | Publication date |
|---|---|---|---|---|---|---|---|
| US 2019084011 | A1 | | 21-03-2019 | CN | 109504598 | A | 22-03-2019 |
| | | | | JP | 6871116 | B2 | 12-05-2021 |
| | | | | JP | 2019050778 | A | 04-04-2019 |
| | | | | US | 2019084011 | A1 | 21-03-2019 |
| US 2013256197 | A1 | | 03-10-2013 | CN | 103357506 | A | 23-10-2013 |
| | | | | JP | 5924276 | B2 | 25-05-2016 |
| | | | | JP | 2013231710 | A | 14-11-2013 |
| | | | | US | 2013256197 | A1 | 03-10-2013 |
| US 2007152206 | A1 | | 05-07-2007 | KR | 20070070533 | A | 04-07-2007 |
| | | | | US | 2007152206 | A1 | 05-07-2007 |
| CN 110628568 | A | | 31-12-2019 | NONE | | | |
| EP 3410107 | A1 | | 05-12-2018 | CN | 108603852 | A | 28-09-2018 |
| | | | | EP | 3410107 | A1 | 05-12-2018 |
| | | | | JP | 6441838 | B2 | 19-12-2018 |
| | | | | JP | 2017134020 | A | 03-08-2017 |
| | | | | US | 2019032103 | A1 | 31-01-2019 |
| | | | | WO | 2017131162 | A1 | 03-08-2017 |
| EP 3418373 | A1 | | 26-12-2018 | CN | 108699506 | A | 23-10-2018 |
| | | | | EP | 3418373 | A1 | 26-12-2018 |
| | | | | JP | 6796932 | B2 | 09-12-2020 |
| | | | | JP | 2017143763 | A | 24-08-2017 |
| | | | | US | 2021205822 | A1 | 08-07-2021 |
| | | | | WO | 2017141685 | A1 | 24-08-2017 |

EPO FORM P0459

For more details about this annex : see Official Journal of the European Patent Office, No. 12/82

## REFERENCES CITED IN THE DESCRIPTION

### Patent documents cited in the description

- US 8765455 B2, Neil Reginald Beer

### Non-patent literature cited in the description

- **CAEN et al.** High-throughput multiplexed fluorescence-activated droplet sorting. *Microsystems & Nanoengineering,* 2018, vol. 4, 33